# FASCICULE DE BREVET EUROPEEN

(11) **EP 3 586 421 B1**
(45) Date de publication et mention de la délivrance du brevet: **07.04.2021**
(21) Numéro de dépôt: 18716507.1
(22) Date de dépôt: 20.02.2018
(51) Int. Cl.: B64D 47/00, H02J 4/00

(54) **PROCÉDÉ ET ARCHITECTURE DE DISTRIBUTION DE PUISSANCE EMBARQUÉE DANS UN AÉRONEF**
VERFAHREN UND ARCHITEKTUR ZUR ENERGIEVERTEILUNG AN BORD EINES FLUGZEUGS
METHOD AND ARCHITECTURE FOR DISTRIBUTING ON-BOARD POWER IN AN AIRCRAFT

(30) Priorité: 22.02.2017 FR 1751382
(43) Date de publication de la demande: 01.01.2020
(73) Titulaire: Latelec, 31676 Labege (FR)
(72) Inventeur: DELAME, Cyrille, 31460 Toutens (FR); PLATZER, Jean-Paul, 31520 Ramonville Saint Agne (FR); BERANGER, Serge, 75009 Paris (FR)
(74) Mandataire: Junca, Eric
(86) Numéro de dépôt international: PCT/EP2018/054059
(87) Numéro de publication internationale: WO 2018/153821

(56) Documents cités:
- EP-A2- 2 260 560
- US-B2- 7 950 606
- US-B2- 8 136 756

## Description

### DOMAINE TECHNIQUE

L'invention se rapporte à un procédé de distribution de puissance électrique embarquée ainsi qu'à une architecture apte à mettre en œuvre ce procédé, ce procédé et cette architecture étant mis en œuvre pour distribuer en particulier la puissance embarquée dans les cabines passagers d'aéronefs. L'invention concerne également un aéronef équipé d'une telle architecture pour mettre en œuvre ce procédé. L'invention s'applique en particulier aux avions commerciaux de génération électrique conventionnelle actuellement exploités.

Le domaine de l'invention concerne la gestion de la puissance électrique distribuée par le réseau électrique dans les aéronefs, et plus particulièrement de la puissance électrique distribuée en cabine d'aéronefs pour les besoins des équipements de cabine concernant aussi bien l'environnement technique (pressurisation, air conditionné, éclairage, etc.) que le confort des passagers (écrans de visualisation, alimentation des équipements passagers, etc.).

Avec l'évolution vers l'avion « tout-électrique », la gestion de la distribution électrique a pris une importance déterminante en terme de puissance électrique distribuée en substituant des équipements fonctionnant à l'électricité à certains des équipements alimentés antérieurement par de l'énergie pneumatique (en particulier dans le conditionnement d'air de la cabine passagers) ou hydraulique (actionneurs de commande de vol, du train d'atterrissage, pompes à huile ou carburant). Les normes de certification électrique garantissent pour chaque modèle d'aéronef la capacité de sa génération électrique à fournir la puissance électrique au système de gestion de distribution, en définissant et préservant une marge de sécurité dans toutes les phases de vol (phases de roulages et taxiages au sol, décollage, ascension, croisière, descente et d'atterrissage) ainsi qu'en cas de perte partielle de génération électrique.

La génération électrique est produite par des générateurs principaux - classiquement deux ou quatre générateurs - chacun entraîné par les moteurs de propulsion de chaque aile de l'aéronef, des turboréacteurs pour les avions de ligne, ainsi que par un générateur de secours (entraîné par une petite éolienne), des batteries, et un groupe auxiliaire de puissance qui assure la fourniture d'énergie électrique et pneumatique au roulage et pour le démarrage des moteurs.

Les générateurs fournissent classiquement des tensions triphasées de 115 et 230 volts à fréquence fixe de 400 Hz (ou à fréquence variable dans la gamme 360 - 800 Hz), une tension de 28 volts de courant continu étant fournie à partir des batteries et de convertisseurs alternatif-continu à partir du réseau principal. L'énergie produite par la génération électrique est alors transportée vers le cœur électrique primaire de l'avion, localisé dans un meuble électrique agencé classiquement dans la soute technique, puis distribuée vers les charges électriques. Le cœur primaire fournit la puissance électrique à différentes tensions sur différentes barres de bus (appelées ci-après barres-bus) de réseaux de distribution primaire puis secondaire, par exemple deux barres-bus de 230 et 115 volts AC (en courant alternatif) et un bus de 28 volts DC (en courant continu). Les réseaux de distribution primaire et secondaire forment le réseau de bord.

Classiquement, les cœurs électriques sont localisés sur deux voies latérales gauche/droite le long du fuselage de l'avion, en liaison avec les générateurs entraînés par les moteurs situés du côté de la voie de barres-bus concernée. Les équipements sont répartis sur les différents barres-bus en fonction de leurs exigences de disponibilité et de puissance.

La puissance électrique du réseau primaire est ainsi redistribuée dans les réseaux avion à partir de boitiers électriques secondaires. Les équipements des systèmes avion sont alimentés via ces réseaux de distribution électrique secondaire constitués de barres-bus, de câbles et de harnais à partir de boitiers secondaires selon leur localisation et de leur charge, en particulier: des actionneurs du train d'atterrissage et de guidage / freinage de la roue avant du système d'interface au sol; des compresseurs du système de conditionnement d'air; les pompes du système d'alimentation en kérosène des moteurs; les pompes des circuits hydrauliques du système de pressurisation; les actionneurs de dégivrage, de ventilation, l'éclairage et l'alimentation des façades d'instrumentation du système cockpit; les calculateurs de la baie avionique située dans la soute technique dite cargo; les équipements techniques (fours des cuisines - « galleys » en dénomination anglaise -, éclairage, ventilation) et domestiques (écrans de divertissement) des réseaux du système cabine dits ci-après « réseaux cabine ».

### ÉTAT DE LA TECHNIQUE

La conception des avions présente une constante de temps élevée, par exemple le Boeing 737 ou l'Airbus A320 mis en service respectivement en 1967 et en 1987 constituent encore les avions les plus vendus au monde à l'heure actuelle. Les architectures avion, et en particulier les architectures électriques, sont certifiées selon les contraintes définies à l'époque de conception, alors que les règles de certification évoluent sans cesse. Chaque avion est différent du précédent, et la plupart des flottes des compagnies aériennes sont constituées d'avions de type très disparates.

Or des équipements électriques sont de plus en plus intégrés dans les avions. Ces équipements se rapportent soit aux charges électriques de forte puissance qui remplacent les actionneurs conventionnels pneumatiques (compresseurs du conditionnement d'air, pompes de pressurisation) ou hydrauliques (commandes de vol, du train d'atterrissage, dégivrage de la voilure), soit aux charges techniques (éclairage, ventilation, écrans de visualisation) et domestiques destinées aux équipements personnels des passagers (smartphones, tablettes, ordinateurs portables, casques de réalité virtuelle, etc.).

L'alimentation des charges de forte puissance et des charges techniques ou domestiques est gérée par un seul et même ensemble de distribution électrique primaire et secondaire. Cette gestion est par exemple illustrée dans le document de brevet EP 2 432 093, qui préconise l'utilisation d'une seule barre-bus de distribution de puissance primaire couplé à un convertisseur secondaire intégré dans chaque cœur secondaire pour fournir la tension adaptée aux équipements des systèmes avion reliés à ce cœur secondaire.

Les documents de brevet FR 3 005 377 ou US 7 950 606 prévoient de multiplier les cœurs secondaires afin de les localiser au plus près des charges à alimenter. Cependant aucun traitement particulier n'est décrit en ce qui concerne l'alimentation des charges électriques de la cabine passagers à partir de la distribution de puissance primaire.

Par ailleurs, le document de brevet US 8 136 756 dédie les charges de forte puissance, par exemple les tensions triphasées, aux barres-bus alimentées par une première génération électrique comportant des générateurs-démarreurs, alors que la puissance des charges de puissance conventionnelle provient de barres-bus alimentées par une génération électrique formée par d'autres générateurs-démarreurs ou des générateurs classiques. Cette assignation des sources opérée au niveau des générateurs de puissance électrique permet d'augmenter la puissance massique par l'utilisation de générateurs-démarreurs à haute vitesse de rotation (permettant d'atteindre des fréquences variant entre 800 et 2 000 Hz).

Cependant, les besoins de la cabine évoluent rapidement, en particulier les charges proches des passagers (écrans, éclairage individuel, connectivité, etc.), selon un cycle technologique plus proche de celui des télécommunications et de l'électronique connectée (smartphones, tablettes, ordinateurs portables, casques de réalité virtuelle, etc.). Or aucune des solutions de l'état de la technique ne permet la souplesse d'alimentation que nécessite une adaptation à ces besoins. Or une telle adaptation est prévue dans les réinstallations successives - ou refittings en terminologie anglaise - des cabines passagers.

Les solutions de l'état de la technique sont alors contraintes, pour redistribuer la puissance électrique dans les réseaux cabine, de convertir en tension et en fréquence la puissance électrique fournie par le réseau de distribution primaire dans le cadre des normes de protection avionique. Or ces normes régissent la sécurité de la distribution de forte puissance pour les équipements de charge élevée (actionneurs du train d'atterrissage, compresseurs de conditionnement d'air, pompes, actionneurs de dégivrage de voilure, etc.) et les conversions font alors intervenir des équipements surdimensionnés de l'électronique de puissance (autotransformateurs) pour pouvoir garantir le respect des normes de certification. Dans ces conditions, la distribution électrique est établie de manière statique, dans un cadre dimensionné pour établir des modes de fonctionnement rigides et préétablis.

### EXPOSÉ DE L'INVENTION

L'invention vise, au contraire, à permettre une souplesse d'adaptation aux charges des réseaux suite aux refittings cabine d'une même flotte sans remise en cause des certifications avion. Pour ce faire, l'invention prévoit une interface qui réalise une séparation fonctionnelle et structurelle entre, d'une part, l'architecture de puissance électrique avionique associée à la certification de l'avion - quel que soit sa date de conception - et, d'autre part, l'architecture des réseaux électriques de la cabine passagers adaptable dans le temps pour alimenter les charges techniques et domestiques associées au besoin des passagers. Une telle indépendance permet également l'ajout de sources de puissance indépendantes pour le réseau cabine tout en respectant les normes du réseau de puissance avionique. Pour ce faire, l'invention prévoit de gérer dynamiquement la puissance électrique du réseau de distribution de la cabine en fonction de la puissance disponible dans le reste du réseau de distribution de puissance en combinant et adaptant différentes sources de puissance sans nuire à la qualité du réseau avionique.

Plus précisément, la présente invention a pour objet un procédé de distribution de puissance électrique embarquée dans un aéronef comportant une cabine passagers et une distribution primaire de puissance électrique sur des réseaux secondaires de distribution de puissance électrique aux systèmes avion, la distribution primaire étant couplée à la génération de puissance électrique fournie par la motorisation de l'aéronef. Le procédé consiste à réaliser une interface de distribution de puissance de ségrégation et de protection entre la distribution primaire et le réseau de distribution secondaire de puissance électrique du système cabine, dit réseau cabine, par une isolation électrique au regard de perturbations agissant sur la distribution primaire relatifs, à piloter l'extraction de la puissance électrique de la distribution primaire par une gestion cabine en fonction de la disponibilité de puissance électrique sur cette distribution primaire, à convertir et à distribuer cette puissance électrique disponible dans le réseau cabine en fonction d'une configuration adaptée des charges de ce réseau cabine et définie en fonction d'un paramétrage électrique en type, alternatif mono/triphasé et continu, ainsi qu'en niveau de tension et de fréquence.

Selon des modes particuliers, le procédé peut prévoir que :
- les perturbations de la distribution primaire se rapportent à des paramètres de qualité relatifs au taux de distorsion harmonique généré par les charges, au niveau de fréquence des tensions alternatives, à la variation de niveau de tension, et/ou au facteur de puissance ;
- la gestion des réseaux cabine est dynamiquement pilotée de sorte que l'extraction de puissance de la distribution primaire pour alimenter l'ensemble des charges des réseaux cabine ne dépasse pas la puissance nominale de la distribution primaire et ne perturbe pas les paramètres de qualité de fonctionnement nominal de la distribution primaire ;
- au moins une alimentation électrique auxiliaire est utilisée pour fournir de la puissance électrique aux réseaux cabine en plus de la puissance électrique de la distribution primaire selon la disponibilité de la puissance électrique primaire;
- la configuration adaptée du réseau cabine est redéfinie en intégrant d'autres niveaux de tension et/ou de fréquence par conversion après ségrégation.

L'invention se rapporte également à une architecture de distribution de puissance électrique embarquée dans un aéronef intégrant notamment une cabine passagers et un fuselage. Cette architecture comporte de chaque côté du fuselage un réseau de distribution de puissance électrique Gauche / Droite composé, pour chaque réseau Gauche / Droite, d'un réseau de distribution primaire de puissance électrique pilotée par un système de gestion avionique, le réseau primaire étant couplé à des réseaux secondaires de distribution de puissance électrique à des systèmes avion. Couplé avec chaque réseau de distribution primaire Gauche / Droite, un cœur électrique de système cabine, intégrant une interface de moyens de ségrégation et de protection combinant des moyens de contrôle et de réglage anti-perturbation du réseau primaire, redistribue la puissance électrique dans chaque réseau de distribution secondaire du système cabine, dit réseau cabine. Une unité de gestion cabine pilote, en interface avec le système de gestion avionique et des besoins en consommation des charges du réseau cabine, l'extraction de puissance électrique de chaque réseau primaire en fonction de la disponibilité de ce réseau pour la distribuer aux charges de consommation du réseau cabine réparties sur une configuration de barres-bus selon le type de tension ainsi que le niveau de tension et de fréquence de ces charges.

Selon des modes de réalisation préférés :
- les moyens de contrôle et de réglage anti-perturbation du réseau primaire sont choisis, par combinaison partielle jusqu'à totale, parmi des systèmes de filtrage des courants harmoniques rejetés vers le réseau primaire, des capacités et/ou inductances réglables pour réguler le facteur de puissance, un dispositif de contrôle du niveau de tension sur le réseau primaire en liaison avec un dispositif de délestage automatique de charges en cas de chute de tension, et/ou une commande de répartition équitable des charges sur les barres-bus de tension triphasées
- chaque unité de gestion cabine comporte un boitier de traitement de signal des contacteurs du réseau cabine en fonction des données de disponibilité du réseau primaire fournies par des boitiers de commande de puissance de bus ou de barres-bus réparties sur les réseaux secondaires des systèmes de bord et des données du système de gestion avionique ;
- des sources auxiliaires d'alimentation électrique en tension alternative et/ou continue sont couplées aux barres-bus du réseau cabine via des contacteurs pour fournir de la puissance électrique complémentaire au réseau cabine indépendamment de la puissance électrique du réseau primaire ;
- chaque réseau cabine comportant au moins une barre-bus de tension triphasée et une barre-bus de tension continue, un convertisseur de tension triphasée / continue et/ou un convertisseur de tension continue / triphasée est (sont) couplé(s) entre la barre-bus triphasée et la barre-bus continue ;
- au moins une barre-bus de réseau de distribution de puissance à des charges domestiques de chaque réseau cabine est couplée à au moins une barre-bus de réseau de distribution de puissance à des charges techniques du réseau cabine via au moins un convertisseur de tension de type alternatif / alternatif et/ou continu / alternatif ;
- des contacteurs également actionnés par le boitier de traitement de signal sont couplés aux convertisseurs du réseau domestique ainsi qu'entre les barres-bus du réseau domestique et les charges domestiques ;
- un circuit de répartition d'alimentation des charges techniques et domestiques du réseau cabine est réalisée sur des rangées de sièges par l'intermédiaire de boitiers de déconnexion standard qui distribuent la puissance électrique sur des boitiers d'interface siège interchangeables montés sur des liaisons siège interchangeables ;
- chaque unité de gestion cabine est contrôlée, c'est-à-dire commander ou surveiller, par un membre du personnel navigant au travers d'une interface de commande.

Dans le présent texte, la consommation technique se rapporte aux dispositifs de conditionnement (pressurisation, éclairage commun, conditionnement d'air, galleys) et de confort (éclairage et ventilation individuels, écrans de visualisation) alors que la consommation domestique s'entend des dispositifs personnels des passagers (smartphones, tablettes, etc.).

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, un schéma-blocs de base d'un exemple d'architecture réseau de distribution de puissance par des barres-bus de tension alternative et continue d'alimentation de charges techniques d'un réseau cabine à partir d'une ségrégation du réseau primaire selon l'invention ;
- la figure 2, un schéma-blocs reprenant l'exemple d'architecture réseau de la figure 1 avec l'intégration de convertisseurs entre les barres-bus du réseau cabine ;
- la figure 3, un schéma fonctionnel de distribution de puissance électrique des réseaux cabine de l'architecture de la figure 1 intégrant une conversion de tension alternative d'alimentation de charges domestiques ;
- la figure 4, un schéma-blocs reprenant le schéma-blocs de la figure 1 et intégrant des convertisseurs entre les barres-bus du réseau cabine d'alimentation des charges techniques et une barre-bus d'alimentation des charges domestiques;
- la figure 5a, un schéma d'architecture de répartition de l'alimentation sur les charges du réseau cabine à partir de boitiers de déconnexion standard de distribution électrique, et
- la figure 5b, une vue schématique en perspective de rangées de sièges d'une cabine passagers d'avion munies de boitiers d'interface interchangeables de distribution électrique.

### DESCRIPTION DÉTAILLÉE

Dans la description ci-dessous, des signes de référence identiques se rapportent à un même élément et renvoient au(x) passage(s) du texte qui le décrive(nt).

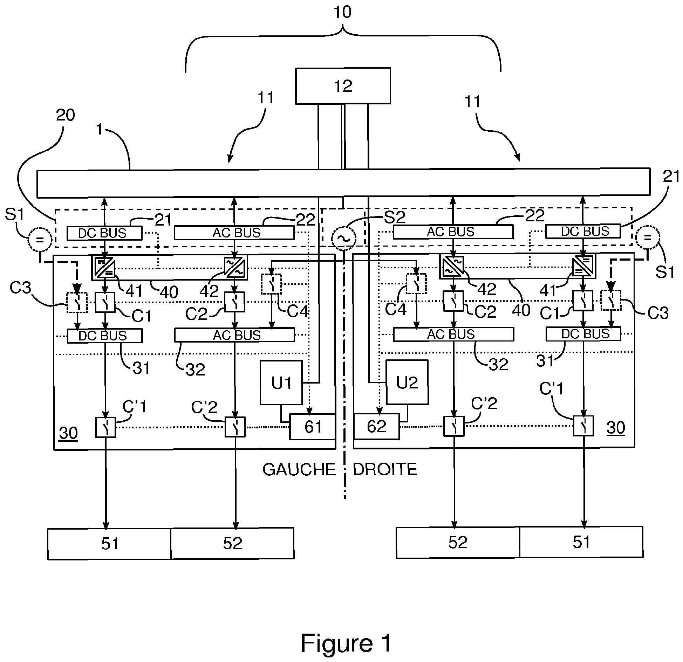

En référence au schéma-blocs d'architecture réseau de la figure 1, l'architecture 10 illustrée comporte, de chaque côté Gauche / Droite d'un fuselage d'avion (non représenté), un réseau de distribution de puissance électrique 11 piloté par un système de gestion avionique 12 en fonction des phases et des conditions de vol.

Chaque réseau Gauche / Droite 11 se compose d'un réseau de distribution primaire 20 et de réseaux de distribution de puissance électrique secondaires, tel que le réseau cabine 30 illustré, couplés au réseau primaire 20 via des cœurs électriques, tel que le cœur 40 du réseau cabine 30. La puissance électrique de réseau primaire 20 est fournie par des générateurs couplés aux moteurs de l'aéronef (non représentés).

Chaque cœur cabine 40 intègre, en interface entre le réseau primaire 20 et chaque réseau cabine 30, une combinaison de moyens de ségrégation 41, 42 qui isolent et protègent électriquement le réseau primaire 20 des réseaux cabine 30 afin de respecter les paramètres de qualité de ce réseau primaire 20, tout en autorisant un ampérage variable sur un large intervalle. La combinaison de moyens de ségrégation anti-perturbation 41, 42 est réalisée dans l'exemple par une combinaison de systèmes de filtrage des courants harmoniques, qui pourraient être rejetés vers le réseau primaire 20, et de circuits de résonance pour réguler le facteur de puissance. Avantageusement, un dispositif de contrôle de niveau de tension sur le réseau primaire 20 en liaison avec un dispositif de délestage automatique de charges en cas de chute de tension, ou des dispositifs permettant un effet de même ordre. En variante, dans le cas où le réseau primaire 20 comporte deux barres de tension triphasée, par exemple de tensions 115 et 230 volts, une répartition équitable des charges sur ces barres-bus de tensions triphasées peut également être avantageusement contrôlée et appliquée par le système de gestion avionique 12.

Ainsi chaque cœur cabine 40 prélève de la puissance électrique du réseau primaire 20 pour la redistribuer dans les charges techniques de tension continue 51 (dispositifs de conditionnement: pressurisation, conditionnement d'air éclairage commun, etc.) et alternative 52 (dispositifs de confort: éclairage et ventilation individuels, écrans de visualisation, etc.) via, respectivement, les barres-bus 31 et 32. Un boitier de traitement de signal 61 / 62 d'une unité de gestion cabine U1 / U2, pilote chaque réseau cabine 30 Gauche et Droite - en particulier: les barres-bus 31 et 32, des contacteurs C1, C2 et C'1, C'2 disposés en amont et en aval des barres-bus 31 et 32, et les cœurs cabine 40 -, en liaison avec les données de l'unité cabine U1 / U2 et du système de gestion avionique 12. Chaque unité de liaison cabine U1 / U2 sert ainsi d'interface entre le système de gestion avionique 12 et les besoins en consommation des charges du réseau cabine 30.

Ce boitier 61 / 62 sert d'interface au personnel navigant pour surveiller et adapter la répartition de puissance dans chaque réseau cabine 30 dans des limites prédéfinies et adaptables. En variante, la gestion est automatisée et le boitier 61 / 62 s'il est prévu dans l'installation sert alors avantageusement à communiquer les informations de répartition de puissance des réseaux cabine 30 au personnel navigant.

Deux sources auxiliaires de puissance électrique S1 et S2, des piles à combustible ou d'autres types de batterie, peuvent avantageusement fournir une alimentation électrique complémentaire en tension continue et alternative pour chaque réseau cabine 30 par couplage aux barres-bus 31 et 32 de tension de même type via des contacteurs C3 et C4, en plus et indépendamment de la puissance électrique du réseau primaire 20. Ces sources auxiliaires S1 et S2 peuvent être sollicitées par l'unité de gestion cabine U1 / U2, via le boitier de signal 61 / 62 des contacteurs C3 et C4, selon les possibilités d'approvisionnement du réseau primaire 20.

La répartition de puissance électrique est en effet réalisée en fonction des données de disponibilité des barres-bus 21 et 22 de chaque réseau primaire 20, transmises au système de gestion avionique 12 par des boitiers de commande de puissance de bus et de barres-bus réparties sur les réseaux secondaires des autres systèmes avion 1, appelés ci-après systèmes de bord, en fonction des propres données du système de gestion avionique 12 selon les phases et conditions de vol, et en fonction de la puissance des charges de consommation technique 51 et 52 des réseaux cabine 30. En variante, des charges techniques ou domestiques, par exemple les galleys qui requièrent de forte puissance, sont directement alimentés par les barres-bus 21 / 22 des réseaux primaires 20 après ségrégation.

Deux exemples de répartition dynamique de la fourniture de puissance électrique, dans lesquels on dispose respectivement de 100 et 50% des sources, sont décrits ci-après en fonction des besoins des réseaux du système cabine et des réseaux des systèmes de bord 1. Dans tous les cas, la puissance extraite du réseau primaire ne dépasse pas la puissance nominale primaire compte tenue de la phase et des conditions de vol.

Dans le premier exemple, chaque barre-bus 21 / 22 de chaque réseau primaire Gauche / Droite 20 délivre une puissance nominale - supposée constante dans le temps - de 45 kW, que ce soit respectivement avec une tension alternative AC ou continue DC. Les besoins d'alimentation des charges des systèmes de bord 1, fournis par chaque barre-bus 21 / 22, s'élèvent à 15 kW et les besoins des charges de chaque barre-bus 31 / 32 de réseau cabine 30 s'élèvent à 25 kW également à délivrer par chaque barre-bus 21 / 22.

Il apparaît que, dans cet exemple, la puissance nécessaire (4 x (15 + 25) = 160 kW) pour l'alimentation de la totalité des charges cabine et des systèmes de bord 1 est inférieure à la puissance disponible (4 x 45 = 180 kW). Chaque unité de gestion de cabine U1 / U2, qui pilote l'alimentation électrique des charges de la cabine, donne priorité à l'alimentation des charges des systèmes de bord 1 en tenant compte de la variation des besoins et cela sans surcharger les réseaux primaires 20. Pour ce faire, plusieurs situations de besoins de puissance à fournir depuis chaque source (barre-bus 21 / 22) peuvent être considérées.

Lorsque les besoins de puissance des systèmes de bord 1 (par exemple 15 kW) et du système cabine (par exemple jusqu'à 30 kW) n'excèdent pas la puissance disponible (45 kW), les réseaux secondaires des systèmes de bord sont correctement alimentés sans surcharger la source.

Mais si le besoin du système cabine augmente au-delà de 30 kW (par exemple 35 kW) de sorte que la puissance demandée par les réseaux secondaires de cabine 30 et de bord 1 (par exemple 35 + 15 kW = 50 kW) dépasse la puissance disponible (45 kW), la puissance réellement fournie au système cabine depuis chaque source est limitée à 30 kW pour ne pas surcharger la source. L'unité de gestion cabine U1 / U2 sollicite alors de la puissance électrique aux sources auxiliaires S1 et S2, en agissant sur les contacteurs C3 et C4 via le boitier correspondant 61 / 62, si la demande de puissance des charges du système cabine persiste ou augmente.

Si, alors, la puissance des systèmes de bord 1 augmente également (par exemple passe de 15 à 18 kW), la consommation en cabine est réduite à 27kW (au lieu de 30 kW) afin de satisfaire l'alimentation prioritaire des systèmes de bord 1 sans surcharger la source. Lorsque la consommation des systèmes de bord 1 diminue à nouveau (par exemple en repassant de 18 à 15 kW), l'unité de gestion de cabine U1 / U2 comble le besoin du système cabine (en passant de 27 à 30 kW) sans surcharger la source correspondante. Si le défaut de puissance persiste ou augmente, les sources auxiliaires S1 et S2 peuvent également fournir de la puissance comme précédemment.

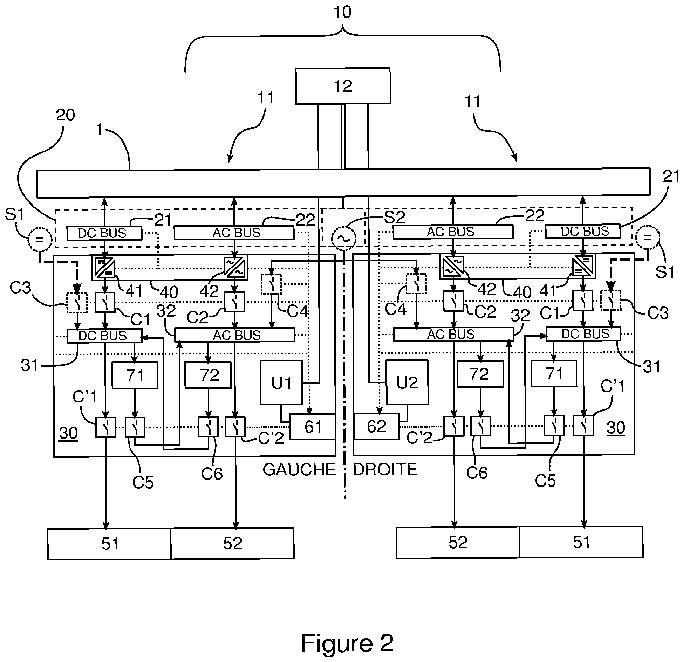

Une telle adaptation dynamique des puissances de tension continue et alternative des charges techniques 51 et 52 des réseaux du système cabine est également illustrée par le schéma-blocs de la figure 2 qui reprend la configuration de base de la figure 1. Dans ce schéma-bloc, chaque réseau cabine 30 Gauche / Droite, intègre un onduleur 71 de circulation de courant entre la barre-bus de tension continue 31 et la barre-bus de tension alternative 32, ainsi qu'un redresseur 72 de circulation de courant entre la barres-bus de tension alternative 32 et la barre-bus de tension continue 31. Des contacteurs C5 et C6, pilotés par chaque boitier de traitement de signal 61/62 sont associés à chaque convertisseur 71 et 72.

Dans ces conditions, une compensation des variations de disponibilité de puissance au niveau des barres-bus 31 et 32 peut être opérée par l'unité de gestion cabine U1 / U2 en réalisant un apport de puissance sur l'une ou l'autre barre-bus 31 et 32 en déficit de puissance lorsque l'autre barre-bus 32 ou 31 peut fournir l'apport de puissance complémentaire. Les charges techniques 51 et 52 sont alors correctement alimentées.

Dans le second exemple de fonctionnement avec 50 % des sources de puissance, dans le cas d'une panne de générateur de puissance du côté Gauche, la puissance globale chute à 90 kW par rapport à l'exemple précédent.

Les barres-bus 21 / 22 du réseau primaire 20 restent alimentées avec une puissance disponible divisée en moyenne de moitié, à savoir 22, 5 kW sur chaque barre-bus de chaque réseau cabine. L'unité de gestion cabine U1 / U2 peut encore alimenter potentiellement toutes les charges cabines. Cependant, l'alimentation des charges cabines sera limitée plus fortement que dans le premier exemple car la puissance disponible est plus faible et les systèmes de bord restent prioritaires. De plus, les charges cabines techniques de conditionnement et leur alimentation seront privilégiées.

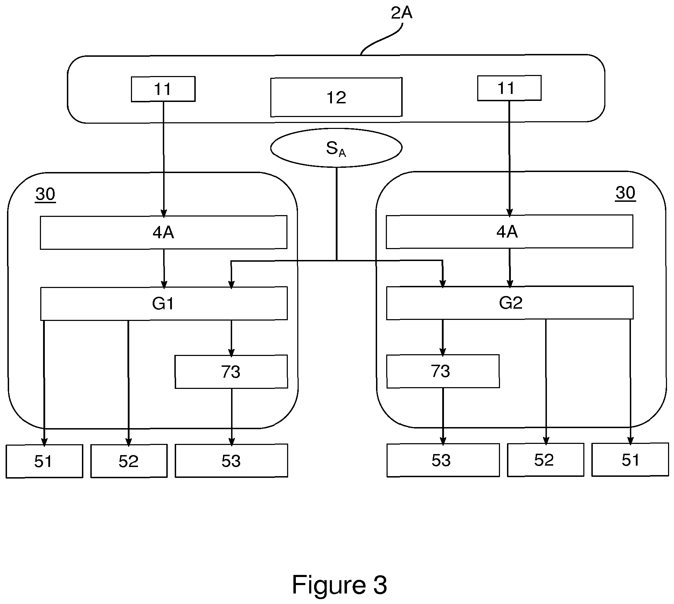

Lorsque chaque réseau cabine 30 intègre des charges domestiques (smartphones, etc.), l'architecture réseau du type illustré par la figure 1 suit le schéma fonctionnel de distribution de puissance électrique de la figure 3 intégrant une alimentation de charges de consommation domestique 53.

Dans ce schéma fonctionnel, une distribution primaire de puissance électrique 2A, contrôlée par le système de gestion avionique 12, fournit la puissance électrique aux charges techniques de tension continue 51 et alternatives 52 de chaque réseau cabine 30 via une double ségrégation de réseaux 4A de tensions continue et alternative. Les puissances électriques sont ensuite contrôlées par un système de gestion cabine G1 / G2, mis en œuvre par l'unité de gestion cabine U1 / U2 associée au boitier de traitement de signal 61 / 62 (cf. figures 1 et 2), et réparties pour alimenter les charges de tensions continue 51 et alternative 52.

L'alimentation des charges domestiques 53 est réalisée par une conversion de tension 73 à partir des ségrégations 4A et est contrôlée par le système de gestion cabine G1 / G2. Afin de compenser les déficits de puissance provenant de la distribution primaire 2A, la puissance électrique provenant des sources auxiliaires S_{A} est également contrôlée par le système de gestion cabine G1 / G2.

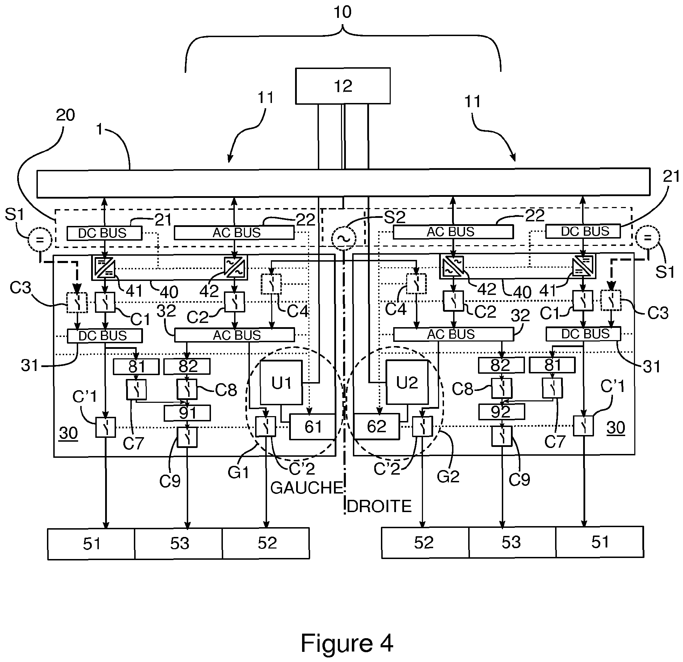

L'alimentation des charges domestiques 53 est illustrée dans le schéma-blocs de la figure 4 qui reprend la configuration de base de la figure 1. Dans ce schéma-bloc, chaque réseau cabine 30 intègre un onduleur 81 de circulation de courant entre la barre-bus de tension continue 31 et, avantageusement, une barre-bus 91 / 92 d'alimentation des charges domestiques 53 en tension alternative. Chaque réseau cabine 30 intègre également un convertisseur-gradateur 82 de circulation de courant alternatif entre la barres-bus 32 et la barre-bus 91 / 92. Des contacteurs C7 et C8 associés à chaque convertisseur 81 et 82 et des contacteurs C9 et C10, de couplage de la barre-bus 91 / 92 avec les charges domestiques 53, sont pilotés par le système de gestion cabine G1 / G2.

L'intégration des convertisseurs 81 et 82 permet, en fonctionnement, de compenser des variations de disponibilité de puissance au niveau des barres-bus 31 et 32 par chaque boitier de traitement de signal 61 / 62 en liaison avec l'unité de gestion cabine U1 / U2, un apport de puissance depuis l'une ou l'autre barre-bus 31 et 32 en déficit de puissance lorsque l'autre barre-bus 32 ou 31 peut fournir l'apport de puissance complémentaire. Les charges domestiques 53 sont alors correctement alimentées. En complément, les sources auxiliaires S1 et S2 peuvent également apporter de la puissance électrique aux barres-bus 31 et 32.

Dans l'exemple, les convertisseurs 71 et 72 de type technique et/ou les convertisseurs 81 et 82 de type domestique permettant des niveaux de tensions alternatives dites domestiques de 115 volts à 60 Hz ou de 220 volts à 50 Hz à partir de tensions alternatives de 115 volts à 400 Hz ou de 230 volts à fréquence variable (par exemple dans l'intervalle 360-800 Hz).

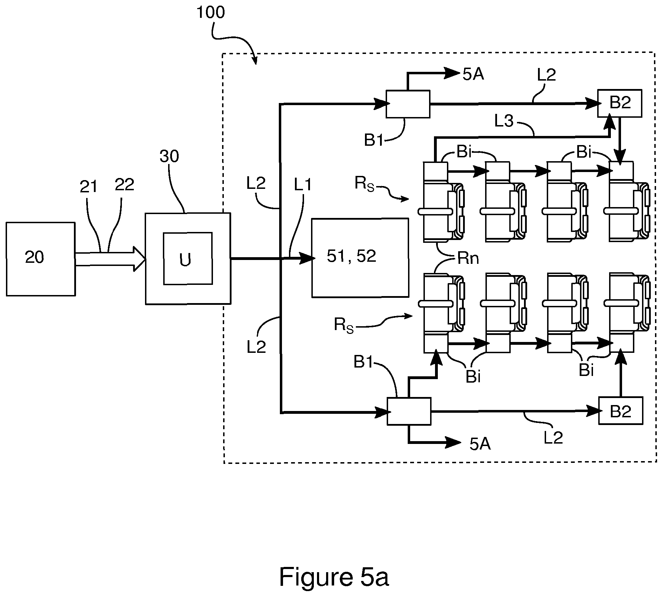

Un schéma d'architecture de répartition de l'alimentation sur les charges techniques et domestiques de chaque réseau cabine 30 est illustré sur la figure 5a. Sur ce schéma, les barres-bus 21 et 22 de chaque réseau primaire 20 transmettent de la puissance électrique, via les réseaux cabine 30 décrits ci-dessus, au circuit 100 de répartition de puissance sur les charges et sous le contrôle de l'unité de gestion cabine « U » (se rapportant à l'une ou l'autre des unités U1 ou U2 précédentes).

Ce circuit 100 comporte des liaisons électriques résidentes L1 d'alimentation des charges techniques 51, 52 de conditionnement (galleys, conditionnement d'air, pressurisation, éclairage commun, etc.) et de confort (éclairage et ventilation individuelle, écrans de visualisation, etc.), et une liaison électrique résidente L2 - d'alimentation des charges domestiques 53 (cf. figures 3 ou 4: smartphones, etc.) - le long de chacune des deux rangées de sièges Rs.

Des boitiers de déconnexion standard B1 et B2, montés sur les liaisons résidentes L2, réalisent une distribution électrique sur des liaisons siège interchangeables L3 à partir de boitiers d'interface interchangeables Bi agencés au pied de chaque rang de sièges Rn. Les premiers boitiers de déconnexion standard B1 selon la circulation du courant fournit de la puissance électrique charges d'éclairage 5A de la cabine.

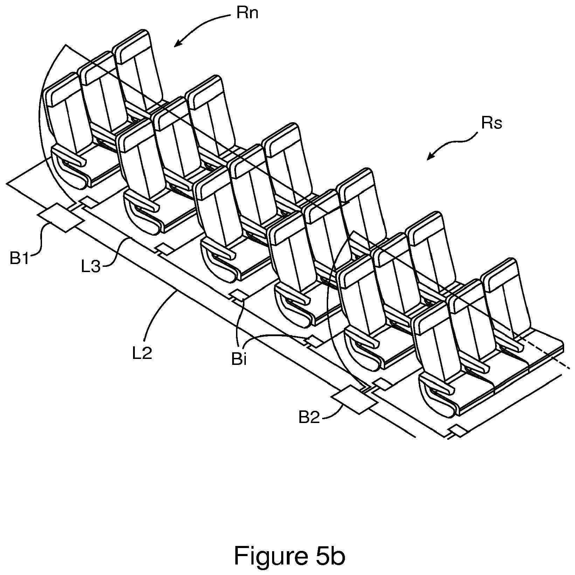

En référence à la vue en perspective de la figure 5b, l'une des rangées de sièges Rs d'une cabine passagers d'avion est plus précisément illustrée. Comme sur la figure 5a, les boitiers d'interface interchangeables de distribution électrique Bi sont disposés au regard de chaque rang de sièges Rn. Et ces boitiers d'interface Bi, alimentés par les boitiers de déconnexion standard B1 et B2 montés sur les liaisons résidentes L2, sont reliés par les liaisons interchangeables L3.

L'invention n'est pas limitée aux exemples décrits et représentés. Ainsi, les sources auxiliaires de puissance électrique peuvent être des batteries ou des accumulateurs. La gestion de la puissance électrique des réseaux cabine peut être automatisée et le personnel navigant n'intervient à travers l'interface de gestion que dans un cadre limité, par exemple dans des cas où la sécurité est en jeu. En variante, cette gestion peut être entièrement automatisée et l'interface de gestion reste alors limitée à une interface d'information.

Par ailleurs, l'alimentation des charges domestiques peut résulter de l'une ou l'autre des conversions de tension alternative ou continue à partir des barres-bus correspondantes ou de la combinaison des deux conversions comme décrite ci-dessus.

De même, pour l'alimentation des charges techniques de conditionnement et de confort, un seul convertisseur entre les barres-bus de tension alternative et continue peut être utilisé, un redresseur ou un onduleur, à la place de la combinaison des deux convertisseurs décrits ci-dessus.

## Revendications

1. Procédé de distribution de puissance électrique embarquée dans un aéronef comportant une cabine passagers et une distribution primaire de puissance électrique (2A) sur des réseaux secondaires (30) de distribution de puissance électrique aux systèmes avion, la distribution primaire (2A) étant couplée à la génération de puissance électrique fournie par la motorisation de l'aéronef, ce procédé est **caractérisé en ce qu'**il consiste à réaliser une interface de distribution de puissance de ségrégation et de protection (4A) entre la distribution primaire (2A) et le réseau de distribution secondaire de puissance électrique du système cabine (30), dit réseau cabine, par une isolation électrique au regard de perturbations agissant sur la distribution primaire (2A), à piloter l'extraction de la puissance électrique de la distribution primaire (2A) par une gestion cabine (G1, G2; U1, U2; 61, 62) en fonction de la disponibilité de puissance électrique sur cette distribution primaire (2A), à convertir et à distribuer cette puissance électrique disponible dans le réseau cabine (30) en fonction d'une configuration adaptée des charges (51, 52, 53) de ce réseau cabine (30) et définie en fonction d'un paramétrage électrique en type, alternatif mono/triphasé et continu, ainsi qu'en niveau de tension et de fréquence.

2. Procédé de rationalisation selon la revendication 1, dans lequel les perturbations de la distribution primaire se rapportent à des paramètres de qualité relatifs au taux de distorsion harmonique généré par les charges (51, 52, 53), au niveau des fréquences des tensions alternatives, à la variation de niveau de tension, et/ou au facteur de puissance.

3. Procédé de rationalisation selon la revendication 2, dans lequel la gestion des réseaux cabine (30) est dynamiquement pilotée de sorte que l'extraction de puissance de la distribution primaire pour alimenter l'ensemble des charges (51, 52, 53) des réseaux cabine (30) ne dépasse pas la puissance nominale de la distribution primaire (2A) et ne perturbe pas les paramètres de qualité de fonctionnement nominal de la distribution primaire.

4. Procédé de rationalisation selon l'une quelconque des revendications, dans lequel au moins une alimentation électrique auxiliaire (S_{A}; S1, S2) est utilisée pour fournir de la puissance électrique aux réseaux cabine (30) en plus de la puissance électrique de la distribution primaire (2A) selon la disponibilité de la puissance électrique primaire.

5. Procédé de rationalisation selon l'une des revendications précédentes, dans lequel la configuration adaptée du réseau cabine (30) est redéfinie en intégrant d'autres niveaux de tension et/ou de fréquence par conversion de tension après ségrégation (4A).

6. Architecture de distribution (10) de puissance électrique embarquée dans un aéronef intégrant notamment une cabine passagers et un fuselage, cette architecture (10) comportant de chaque côté du fuselage un réseau de distribution de puissance électrique Gauche / Droite (11) composé, pour chaque réseau Gauche / Droite, d'un réseau (20) de distribution primaire de puissance **électrique (2A)** pilotée par un système de gestion avionique (12), le réseau primaire (20) étant couplé à des réseaux secondaires (30) de distribution de puissance électrique à des systèmes avion (1, 30) et cette architecture (10) étant **caractérisé en ce qu'**elle comporte, couplé avec chaque réseau de distribution primaire Gauche / Droite (20), un cœur électrique de système cabine (40) intégrant une interface (4A) de moyens de ségrégation et de protection (41, 42) combinant des moyens de contrôle et de réglage anti-perturbation du réseau primaire (20), ce cœur (40) redistribuant la puissance électrique dans chaque réseau secondaire du système cabine (30), dit réseau cabine, et **en ce qu'**elle comporte également une unité de gestion cabine (U1, U2) de pilotage, en interface avec le système de gestion avionique (12) et des besoins en consommation des charges (51, 52, 53) du réseau cabine (30), de l'extraction de puissance électrique de chaque réseau primaire (20) en fonction de la disponibilité de ce réseau (20) pour distribuer de la puissance électrique aux charges de consommation du réseau cabine (51, 52, 53) réparties sur une configuration de barres-bus (31, 32; 91, 92) selon le type de tension ainsi que le niveau de tension et de fréquence de ces charges.

7. Architecture de distribution selon la revendication précédente, dans laquelle dans laquelle les moyens de contrôle et de réglage anti-perturbation du réseau primaire (20) sont choisis, par combinaison partielle jusqu'à totale, parmi des systèmes de filtrage des courants harmoniques rejetés vers le réseau primaire, des capacités et/ou inductances réglables pour réguler le facteur de puissance, un dispositif de contrôle du niveau de tension sur le réseau primaire en liaison avec un dispositif de délestage automatique de charges en cas de chute de tension, et/ou une répartition équitable des charges sur les barres-bus de tension triphasées

8. Architecture de distribution selon l'une quelconque des revendications 6 ou 7, dans laquelle chaque unité de gestion cabine (U1, U2) comporte un boitier de traitement de signal (61, 62) des contacteurs (C1, C2; C'1, C'2; C3, C4) du réseau cabine (30) en fonction des données de disponibilité du réseau primaire (20) fournies par des boitiers de commande de puissance de bus ou de barres-bus réparties sur les réseaux secondaires des systèmes de bord (1) et des données du système de gestion avionique (12).

9. Architecture de distribution selon l'une quelconque des revendications 6 à 8, dans laquelle des sources auxiliaires d'alimentation électrique (S1, S2) en tension alternative et/ou continue sont couplées aux barres-bus (31, 32) du réseau cabine (30) via des contacteurs (C3, C4) pour fournir de la puissance électrique complémentaire au réseau cabine (30) indépendamment de la puissance électrique du réseau primaire (20).

10. Architecture de distribution selon l'une quelconque des 6 à 9, dans laquelle, chaque réseau cabine (30) comportant au moins une barre-bus de tension triphasée (32) et une barre-bus de tension continue (31), un convertisseur de tension triphasée / continue (72) et/ou un convertisseur de tension continue / triphasée (71) est (sont) couplé(s) entre la barre-bus triphasée (32) et la barre-bus continue (31).

11. Architecture de distribution selon la revendication précédente, dans laquelle au moins une barre-bus (91, 92) de réseau de distribution de puissance à des charges domestiques (53) de chaque réseau cabine (30) est couplée à au moins une barre-bus (31, 32) de réseau de distribution de puissance à des charges techniques (53) du réseau cabine (30) via au moins un convertisseur de tension de type alternatif / alternatif (82) et/ou continu / alternatif (81).

12. Architecture de distribution selon la revendication précédente, **caractérisée en ce que** des contacteurs (C7, C8, C9, C10), actionnés également par le boitier de traitement de signal (61, 62), sont couplés aux convertisseurs (81, 82) du réseau domestique ainsi qu'entre les barres-bus (91, 92) du réseau domestique et les charges domestiques (53).

13. Architecture de distribution selon l'une quelconque des revendications 11 ou 12, dans laquelle un circuit de répartition (100) d'alimentation des charges techniques (51, 52) et domestiques (53) du réseau cabine (30) est réalisée sur des rangées de sièges (Rs) par l'intermédiaire de boitiers de déconnexion standard (B1, B2) qui distribuent la puissance électrique sur des boitiers d'interface siège interchangeables (Bi) montés sur des liaisons siège interchangeables (L3).

14. Architecture de distribution selon l'une quelconque des revendications 8 à 13, dans laquelle chaque unité de gestion cabine (U1, U2) est contrôlée par un membre du personnel navigant au travers du boitier de traitement de signal (61, 62).

15. Aéronef comportant une cabine passagers et un double réseau de distribution de puissance électrique (11) composé d'un réseau primaire (20) et de réseaux secondaires de distribution de puissance électrique aux systèmes avion (1, 30), **caractérisé en ce qu'**il est équipé d'une architecture (10) de distribution de puissance électrique selon l'une quelconque des revendications 6 à 14 pour mettre en œuvre le procédé selon l'une quelconque des revendications 1 à 5.

## Patentansprüche

1. Verfahren zur elektrischen Energieverteilung an Bord eines Luftfahrzeugs, das eine Passagierkabine und eine primäre elektrische Energieverteilung (2A) aufweist, auf sekundäre Netze (30) zur elektrischen Energieverteilung auf die Flugzeugsysteme, wobei die primäre Verteilung (2A) mit der Erzeugung elektrischer Energie gekoppelt ist, die von den Triebwerken des Luftfahrzeugs geliefert wird, wobei dieses Verfahren **dadurch gekennzeichnet ist, dass** es darin besteht, eine Energieverteilungsschnittstelle zur Abschottung und zum Schutz (4A) zwischen der primären Verteilung (2A) und dem sekundären Netz zur elektrischen Energieverteilung des Kabinensystems (30), Kabinennetz genannt, durch eine elektrische Isolation im Hinblick auf Störungen, die auf die primäre Verteilung (2A) einwirken, zu realisieren, die Entnahme der elektrischen Energie aus der primären Verteilung (2A) durch ein Kabinenmanagement (G1, G2; U1, U2; 61, 62) in Abhängigkeit von der Verfügbarkeit elektrischer Energie auf dieser primären Verteilung (2A) zu steuern, und diese verfügbare elektrische Energie im Kabinennetz (30) in Abhängigkeit von einer angepassten Konfiguration der Lasten (51, 52, 53) dieses Kabinennetzes (30), die in Abhängigkeit von einer elektrischen Parametrierung nach Typ, Einphasen-/Dreiphasenwechselstrom und Gleichstrom, sowie nach Spannungs- und Frequenzpegel definiert ist, umzuwandeln und zu verteilen.

2. Verfahren zur Rationalisierung nach Anspruch 1, wobei sich die Störungen der primären Verteilung auf Qualitätsparameter beziehen, welche das von den Lasten (51, 52, 53) erzeugte Gesamt-Oberschwingungsverhältnis, die Pegel der Frequenzen der Wechselspannungen, die Änderung des Spannungspegels und/oder den Leistungsfaktor betreffen.

3. Verfahren zur Rationalisierung nach Anspruch 2, wobei das Management der Kabinennetze (30) dynamisch gesteuert wird, und zwar derart, dass die Entnahme von Energie aus der primären Verteilung zum Versorgen der Gesamtheit der Lasten (51, 52, 53) der Kabinennetze (30) die Nennleistung der primären Verteilung (2A) nicht überschreitet und die Qualitätsparameter des Nennbetriebs der primären Verteilung nicht beeinträchtigt.

4. Verfahren zur Rationalisierung nach einem der Ansprüche, wobei wenigstens eine Hilfsstromversorgung (S_{A}, S1, S2) verwendet wird, um je nach der Verfügbarkeit der primären elektrischen Energie den Kabinennetzen (30) zusätzlich zu der elektrischen Energie der primären Verteilung (2A) elektrische Energie zu liefern.

5. Verfahren zur Rationalisierung nach einem der vorhergehenden Ansprüche, wobei die angepasste Konfiguration des Kabinennetzes (30) neu definiert wird, indem andere Spannungs- und/oder Frequenzpegel durch Spannungsumwandlung nach Abschottung (4A) einbezogen werden.

6. Architektur (10) zur elektrischen Energieverteilung an Bord eines Luftfahrzeugs, in das insbesondere eine Passagierkabine und ein Rumpf integriert sind, wobei diese Architektur (10) auf jeder Seite des Rumpfes ein linkes/rechtes Netz zur elektrischen Energieverteilung (11) aufweist, das, für jedes linke/rechte Netz, aus einem Netz (20) zur primären elektrischen Energieverteilung (2A) besteht, das von einem Avionik-Managementsystem (12) gesteuert wird, wobei das primäre Netz (20) mit sekundären Netzen (30) zur elektrischen Energieverteilung auf Flugzeugsysteme (1, 30) gekoppelt ist und diese Architektur (10) **dadurch gekennzeichnet ist, dass** sie, gekoppelt mit jedem linken/rechten Netz zur primären Verteilung (20), einen elektrischen Kern (40) des Kabinensystems aufweist, in den eine Schnittstelle (4A) von Mitteln zur Abschottung und zum Schutz (41, 42) integriert ist, die Mittel zur Steuerung und zur Störungsschutz-Regelung des primären Netzes (20) kombiniert, wobei dieser Kern (40) die elektrische Energie in jedem sekundären Netz des Kabinensystems (30), Kabinennetz genannt, umverteilt, und dadurch, dass sie außerdem eine Kabinen-Managementeinheit (U1, U2) aufweist, zur Steuerung, an der Schnittstelle mit dem Avionik-Managementsystem (12) und dem Energiebedarf der Lasten (51, 52, 53) des Kabinennetzes (30), der Entnahme von elektrischer Energie jedes primären Netzes (20) in Abhängigkeit von der Verfügbarkeit dieses Netzes (20), um elektrische Energie auf die Energie verbrauchenden Lasten (51, 52, 53) des Kabinennetzes zu verteilen, die auf eine Konfiguration von Sammelschienen (31, 32; 91, 92) je nach dem Spannungstyp sowie dem Spannungs- und Frequenzpegel dieser Lasten verteilt sind.

7. Architektur zur Verteilung nach dem vorhergehenden Anspruch, wobei die Mittel zur Steuerung und zur Störungsschutz-Regelung des primären Netzes (20) als teilweise bis vollständige Kombination aus Folgendem ausgewählt sind: aus Systemen zur Filterung der Stromoberschwingungen, die auf das primäre Netz rückwirken, einstellbaren Kapazitäten und/oder Induktivitäten zum Regeln des Leistungsfaktors, einer Vorrichtung zur Steuerung des Spannungspegels im primären Netz in Verbindung mit einer Vorrichtung zum automatischen Abwurf von Lasten im Falle eines Spannungsabfalls, und/oder einer ausgewogenen Verteilung der Lasten auf die Dreiphasenwechselspannungs-Sammelschienen.

8. Architektur zur Verteilung nach einem der Ansprüche 6 oder 7, wobei jede Kabinenmanagement-Einheit (U1, U2) eine Box zur Signalverarbeitung (61, 62) der Schaltschütze (C1, C2; C'1, C'2; C3, C4) des Kabinennetzes (30) in Abhängigkeit von den Verfügbarkeitsdaten des primären Netzes (20), die von Leistungssteuerungsboxen von Bussen oder Sammelschienen geliefert werden, die auf die sekundären Netze der Bordsysteme (1) verteilt sind, und von den Daten des Avionik-Managementsystems (12) aufweist.

9. Architektur zur Verteilung nach einem der Ansprüche 6 bis 8, wobei Hilfsstromquellen (S1, S2) zur Versorgung mit Wechsel- und/oder Gleichspannung über Schaltschütze (C3, C4) mit den Sammelschienen (31, 32) des Kabinennetzes (30) gekoppelt sind, um unabhängig von der elektrischen Energie des primären Netzes (20) zusätzliche elektrische Energie an das Kabinennetz (30) zu liefern.

10. Architektur zur Verteilung nach einem der Ansprüche 6 bis 9, wobei, wenn jedes Kabinennetz (30) wenigstens eine Dreiphasenwechselspannungs-Sammelschiene (32) und eine Gleichspannungs-Sammelschiene (31) aufweist, ein Dreiphasenwechselspannungs-Gleichspannungs-Umrichter (72) und/oder ein Gleichspannungs-Dreiphasenwechselspannungs-Umrichter (71) zwischen die Dreiphasenwechselspannungs-Sammelschiene (32) und die Gleichspannungs-Sammelschiene (31) geschaltet sind (ist).

11. Architektur zur Verteilung nach dem vorhergehenden Anspruch, wobei wenigstens eine Sammelschiene (91, 92) des Netzes zur Energieverteilung auf den Passagieren zugeordnete Lasten (53) jedes Kabinennetzes (30) mit wenigstens einer Sammelschiene (31, 32) des Netzes zur Energieverteilung auf technische Lasten (53) des Kabinennetzes (30) über wenigstens einen Spannungsumrichter vom Typ Wechselspannung/Wechselspannung (82) und/oder Gleichspannung/Wechselspannung (81) gekoppelt ist.

12. Architektur zur Verteilung nach dem vorhergehenden Anspruch, **dadurch gekennzeichnet, dass** Schaltschütze (C7, C8, C9, C10), die auch von der Signalverarbeitungsbox (61, 62) betätigt werden, mit den Umrichtern (81, 82) des den Passagieren zugeordneten Netzes gekoppelt sowie zwischen die Sammelschienen (91, 92) des den Passagieren zugeordneten Netzes und die den Passagieren zugeordneten Lasten (53) geschaltet sind.

13. Architektur zur Verteilung nach einem der Ansprüche 11 oder 12, wobei eine Schaltung zur Verteilung (100) der Versorgung der technischen (51, 52) und der den Passagieren zugeordneten Lasten (53) des Kabinennetzes (30) an den Sitzreihen (Rₛ) über standardmäßige Trennungsboxen (B1, B2) realisiert ist, welche die elektrische Energie auf austauschbare Sitzschnittstellen-Boxen (Bi) verteilen, die an austauschbaren Sitzverbindungen (L3) angebracht sind.

14. Architektur zur Verteilung nach einem der Ansprüche 8 bis 13, wobei jede Kabinen-Managementeinheit (U1, U2) von einem Mitglied des fliegenden Personals über die Signalverarbeitungsbox (61, 62) gesteuert wird.

15. Luftfahrzeug, welches eine Passagierkabine und ein doppeltes Netz zur elektrischen Energieverteilung (11) aufweist, das aus einem primären Netz und sekundären Netzen zur elektrischen Energieverteilung auf die Flugzeugsysteme (1, 30) besteht, **dadurch gekennzeichnet, dass** es mit einer Architektur (10) zur elektrischen Energieverteilung nach einem der Ansprüche 6 bis 14 zur Durchführung des Verfahrens nach einem der Ansprüche 1 bis 5 ausgestattet ist.

## Claims

1. A method for distributing on-board electrical power in an aircraft comprising a passenger cabin and a primary distribution of electrical power to secondary networks for distributing electrical power to airplane systems, the primary distribution being coupled to the generation of electrical power by the engine(s) of the aircraft, this method comprises the steps of forming a segregating and protecting power-distribution interface between the primary distribution and the secondary network for distributing electrical power of the cabin system, which network is called the cabin network, by an electrical isolation with respect to perturbations acting on the primary distribution, of controlling the extraction of electrical power from the primary distribution via a cabin management depending on the availability of electrical power in this primary distribution, of converting and distributing this available electrical power to the cabin network depending on a suitable configuration of the loads of this cabin network, which configuration is defined depending on an electrical categorization by single-/three-phase AC or DC, and by voltage and frequency level.

2. The rationalizing method as claimed in claim 1, wherein the perturbations of the primary distribution pertain to quality parameters relating to the degree of harmonic distortion generated by the loads, to the level of the frequencies of the AC voltages, to the variation in voltage level, and/or to the power factor.

3. The rationalizing method as claimed in claim 1, wherein the management of the cabin networks is controlled dynamically so that the extraction of power from the primary distribution to supply all of the loads of the cabin networks does not exceed the nominal power of the primary distribution and does not perturb the quality parameters of nominal operation of the primary distribution.

4. The rationalizing method as claimed in claim 1, wherein at least one auxiliary power unit is used to deliver electrical power to the cabin networks in addition to the electrical power of the primary distribution according to the availability of the primary electrical power.

5. The rationalizing method as claimed in claim 1, wherein the suitable configuration of the cabin network is redefined by incorporating other voltage and/or frequency levels by voltage conversion after segregation.

6. An architecture for distributing electrical power on-board an aircraft in particular incorporating a passenger cabin and a fuselage, this architecture having, on each side of the fuselage, a left/right network for distributing electrical power, composed, for each left/right network, of a network for distributing a primary distribution of electrical power, which distribution is controlled by an avionic management system, the primary network being coupled to secondary networks for distributing electrical power to airplane systems, and this architecture comprises, coupled to each left/right primary distribution network, a cabin-system power distribution center incorporating an interface of segregating and protecting means combining controlling or monitoring and adjusting means for preventing perturbation of the primary network, this power distribution center distributing electrical power to each secondary network of the cabin system, which networks are called cabin networks, and it also comprises a cabin management unit that controls, in interface with the avionic management system and in light of the consumption needs of the loads of the cabin network, the extraction of electrical power from each primary network depending on the availability of this network, in order to distribute electrical power to the consuming loads of the cabin network, which loads are distributed, via a configuration of busbars, depending on the type of voltage and the voltage and frequency level of these loads.

7. The distributing architecture as claimed in claim 6, wherein the controlling or monitoring and adjusting means for preventing perturbation of the primary network are chosen from among, in partial up to complete combination, systems for filtering harmonic currents rejected to the primary network, capacitors and/or inductors that are adjustable in order to regulate power factor, a device for controlling or monitoring the voltage level on the primary network in conjunction with a device for automatically unloading loads in case of a voltage drop, and/or an equitable distribution of the loads on the three-phase voltage busbars.

8. The distributing architecture as claimed in claim 6, wherein each cabin management unit comprises a signal-processing box of contactors of the cabin network depending on data on the availability of the primary network, which data are delivered by boxes for controlling the power of buses or busbars and distributed in the secondary networks of the aircraft systems, and depending on data from the avionic management system.

9. The distributing architecture as claimed in claim 6, wherein auxiliary power units that supply AC and/or DC voltage are coupled to the busbars of the cabin network via contactors in order to deliver supplementary electrical power to the cabin network independently of the electrical power of the primary network.

10. The distributing architecture as claimed in claim 6, wherein, each cabin network comprising at least one three-phase voltage busbar and one DC voltage busbar, a three-phase/DC voltage converter and/or a DC/three-phase voltage converter is (are) coupled between the three-phase busbar and the DC busbar.

11. The distributing architecture as claimed in claim 10, wherein at least one busbar of the network for distributing power to domestic loads of each cabin network is coupled to at least one busbar of the network for distributing power to technical loads of the cabin network via at least one AC/AC voltage converter and/or DC/AC voltage converter.

12. The distributing architecture as claimed in claim 11, wherein that contactors, which are also actuated by the signal-processing box, are coupled to the converters of the domestic network and between the busbars of the domestic network and the domestic loads.

13. The distributing architecture as claimed in claim 12, wherein a circuit for distributing power to the technical loads and domestic loads of the cabin network is formed in rows of seats by way of standard disconnect boxes that distribute electrical power to interchangeable seat-interface boxes that are mounted on interchangeable seat links.

14. The distributing architecture as claimed in claim 8, wherein each cabin management unit is controlled or monitored by a member of the cabin crew through the signal-processing box.

15. An aircraft comprising a passenger cabin and a double network for distributing electrical power, which network is composed of a primary network and secondary networks for distributing electrical power to the airplane systems, wherein the aircraft is equipped with an architecture for distributing electrical power as claimed in claim 6 for implementing the method as claimed in claim 1.
